(19) Europäisches Patentamt / European Patent Office / Office européen des brevets

(11) **EP 4 756 892 A1**

(12) **EUROPEAN PATENT APPLICATION**
published in accordance with Art. 153(4) EPC

(43) Date of publication:
**10.06.2026 Bulletin 2026/24**

(21) Application number: **24848884.3**

(22) Date of filing: **12.07.2024**

(51) International Patent Classification (IPC):
$H01M\ 4/13^{(2010.01)}$       $H01M\ 4/62^{(2006.01)}$
$H01M\ 10/0525^{(2010.01)}$    $H01M\ 4/36^{(2006.01)}$
$H01M\ 4/133^{(2010.01)}$

(52) Cooperative Patent Classification (CPC):
**H01M 4/13; H01M 4/133; H01M 4/366; H01M 4/62;
H01M 4/625; H01M 10/0525;** H01M 2004/027;
Y02E 60/10

(86) International application number:
**PCT/JP2024/025268**

(87) International publication number:
**WO 2025/028228 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **31.07.2023   JP 2023124828**

(71) Applicant: **Panasonic Intellectual Property
Management Co., Ltd.
Kadoma-shi, Osaka 571-0057 (JP)**

(72) Inventors:
• **KONISHI Atsushi
  Kadoma-shi, Osaka 571-0057 (JP)**
• **SUZUKI Hirotetsu
  Kadoma-shi, Osaka 571-0057 (JP)**

(74) Representative: **Novagraaf International SA
Chemin de l'Echo 3
1213 Onex, Geneva (CH)**

(54) **NONAQUEOUS ELECTROLYTE SECONDARY BATTERY**

(57)    This nonaqueous electrolyte secondary battery includes a negative electrode collector (40) and a negative electrode mixture layer (41) that is formed on the negative electrode collector (40). The negative electrode mixture layer (41) has a negative electrode active material that is capable of occluding and releasing lithium ions, and a silicate compound (48). The negative electrode mixture layer (41) has a first region (45) that is positioned on the negative electrode current collector (40) side with respect to the thickness direction, and a second region (46) that is positioned on the opposite side from the negative electrode current collector (40) side. The content of the silicate compound (48) in the first region (45) is higher than the content of the silicate compound (48) in the second region (46).

Figure 2

**Description**

TECHNICAL FIELD

The present disclosure relates to a non-aqueous electrolyte secondary battery.

BACKGROUND ART

In a negative electrode that is used for a non-aqueous electrolyte secondary battery and that has a negative electrode mixture layer formed on a current collector, an electrolyte liquid permeated inside the negative electrode mixture layer may react with negative electrode active material particles to cause charge and discharge reactions inside the negative electrode mixture layer. Due to expansion and contraction of the negative electrode active material particles during charge and discharge, the negative electrode mixture layer also expands and contracts. According to this, discharge of the electrolyte liquid permeated inside the negative electrode mixture layer toward the outside of the negative electrode mixture layer makes distribution of the electrolyte liquid uneven in the negative electrode mixture layer to raise resistance. Specifically, charge and discharge at a high rate increase change in volume of the negative electrode active material particles and expands the electrolyte liquid due to Joule heat to remarkably raise the resistance.

Patent Literature 1 describes a negative electrode comprising a negative electrode mixture layer including composite particles and a binder, wherein the composite particles have negative electrode active material particles and a coating, and the coating covers at least a part of surfaces of the negative electrode active material particles. In this negative electrode, a nanofiber included in the binder and a silicate salt mineral in the coating form a composite that inhibits expansion of the negative electrode active material particles. It is said that a rise in resistance of the battery during high-rate cycles is small due to this composite.

Patent Literature 2 describes a negative electrode in which a negative electrode mixture layer is formed on a negative electrode current collector, wherein the negative electrode mixture layer comprises a first layer formed on the negative electrode current collector and a second layer formed on the first layer. The first layer includes a first carbon-based active material, a Si-based active material, polyacrylic acid or a salt thereof, and fibrous carbon. The second layer includes a second carbon-based active material having a higher tap density than the first carbon-based active material. It is said that this configuration smoothens transfer of lithium ions in the second layer to improve input characteristics of the battery.

CITATION LIST

PATENT LITERATURE

PATENT LITERATURE 1: Japanese Unexamined Patent Application Publication No. 2020-57500
PATENT LITERATURE 2: International Publication No. WO2020/0271763

SUMMARY

Both Patent Literature 1 and 2 have room for improvement in terms of enhancing charge-discharge characteristics during high-rate cycles.

A non-aqueous electrolyte secondary battery of an aspect of the present disclosure comprises: a negative electrode current collector; and a negative electrode mixture layer formed on the negative electrode current collector, wherein the negative electrode mixture layer includes: a negative electrode active material that can occlude and release lithium ions; and a silicate salt compound, the negative electrode mixture layer has: a first region disposed on a side of the negative electrode current collector relative to a thickness direction; and a second region disposed on a side opposite to the side of the negative electrode current collector relative to the thickness direction, and a content of the silicate salt compound in the first region is higher than a content of the silicate salt compound in the second region.

The non-aqueous electrolyte secondary battery according to the present disclosure may smoothen transport of lithium ions in the negative electrode and may reduce concentration unevenness of lithium ions in the negative electrode mixture layer in the thickness direction. This may improve the charge-discharge characteristics during high-rate cycles in the secondary battery.

BRIEF DESCRIPTION OF DRAWING

FIG. 1 is a longitudinal sectional view of a non-aqueous electrolyte secondary battery of an example of an embodiment.

FIG. 2 is an outline sectional view illustrating one side in a thickness direction of a negative electrode comprised in the non-aqueous electrolyte secondary battery in FIG. 1.

FIG. 3 is a schematic view of montmorillonite being a silicate salt compound included in the negative electrode illustrated in FIG. 2.

DESCRIPTION OF EMBODIMENTS

As noted above, the non-aqueous electrolyte secondary battery has room for improvement in terms of enhancing the charge-discharge characteristics during high-rate cycles. The present inventors have intensively investigated the above problem, and consequently found that the above problems may be solved by including a silicate salt compound in a negative electrode mixture layer, including a first region disposed on a side of the negative electrode current collector relative to a thickness direction and a second region disposed on a side opposite to the side of the negative electrode current collector relative to the thickness direction in the negative electrode mixture layer, and setting a content of the silicate salt compound in the first region to be higher than that in the second region. That is, the silicate salt compound has high adsorption ability and high diffusability of lithium ions. Setting the content of the silicate salt compound in the first region, which is the negative electrode current collector side, to be higher than that in the second region, which is the side opposite to the negative electrode current collector side, enhances transport of lithium ions in the negative electrode to reduce concentration unevenness of lithium ions in the negative electrode mixture layer in the thickness direction. As a result, the charge-discharge characteristics during high-rate cycles in the secondary battery may be improved.

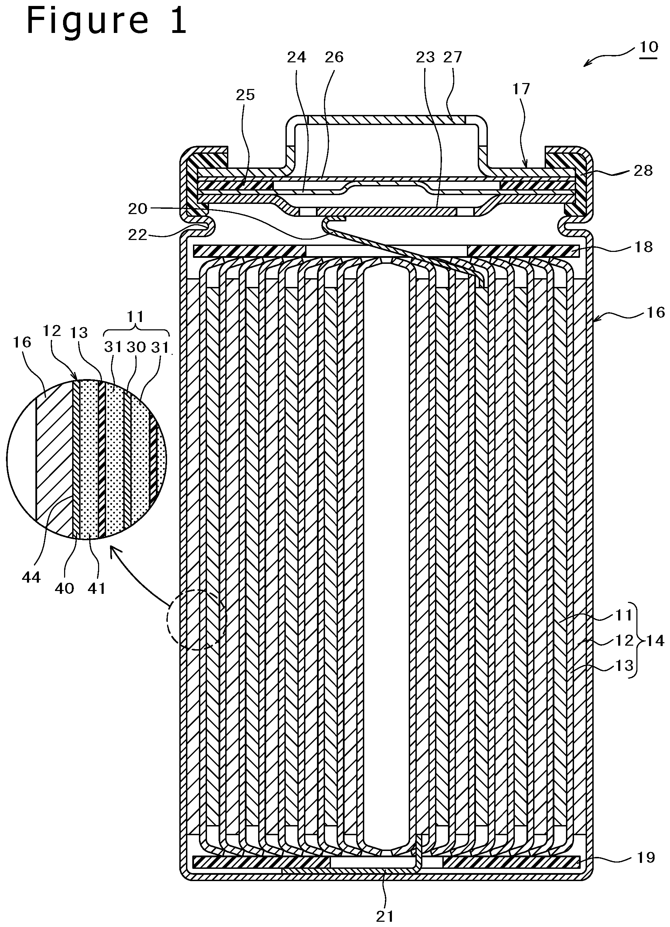

Hereinafter, an example of an embodiment of a lithium ion secondary battery being a non-aqueous electrolyte secondary battery according to the present disclosure will be described in detail with reference to FIG. 1 to FIG. 3. Hereinafter, a cylindrical battery in which a wound electrode assembly is housed in a cylindrical battery case will be exemplified, but the electrode assembly is not limited to the wound electrode assembly, and may be a stacked electrode assembly in which a plurality of positive electrodes and a plurality of negative electrodes are alternately stacked one by one via a separator. The battery case is not limited to the cylindrical battery case, and may have, for example, a rectangular shape, or a coin shape, and may be a battery case constituted with laminated sheets including a metal layer and a resin layer.

FIG. 1 is a longitudinal sectional view of a lithium ion secondary battery 10 (hereinafter, described as the secondary battery 10) being an example of an embodiment. In the secondary battery 10 illustrated in FIG. 1, an electrode assembly 14 and a non-aqueous electrolyte (not illustrated) are housed in an exterior housing can 16. Hereinafter, for convenience of description, a sealing assembly 17 side will be described as "the upper side", and the bottom side of the exterior housing can 16 will be described as "the lower side".

The electrode assembly 14 has a wound structure in which a positive electrode 11 and a negative electrode 12 are wound via a separator 13. The positive electrode 11, the negative electrode 12, and the separator 13 are all a band-shaped elongated body, and spirally wound to be alternately stacked in a radial direction of the electrode assembly 14. The separator 13 is formed to be one size larger than the positive electrode 11 and the negative electrode 12, and two of them are disposed so as to sandwich the positive electrode 11.

The opening of the upper end of the exterior housing can 16 is sealed with the sealing assembly 17 to seal an inside of the secondary battery 10. An upper insulating plate 18 and a lower insulating plate 19 are provided on the upper and lower sides of the electrode assembly 14, respectively. A positive electrode tab 20 vertically extends through a through hole of the upper insulating plate 18, and connects a terminal plate 23, which is a bottom plate of the sealing assembly 17, and the positive electrode 11 included in the electrode assembly 14. This configuration connects the positive electrode 11 and the sealing assembly 17, and in the secondary battery 10, a cap 27, which is a top plate of the sealing assembly 17 electrically connected to the terminal plate 23, becomes a positive electrode terminal. The positive electrode tab 20 is an aluminum tab, for example. Meanwhile, a negative electrode tab 21 extends through a through hole of the lower insulating plate 19 toward a bottom side of the exterior housing can 16, and is welded with a bottom inner surface of the exterior housing can 16. This configuration connects the negative electrode 12 and the exterior housing can 16, and in the secondary battery 10, the exterior housing can 16 becomes a negative electrode terminal. The negative electrode tab 21 is a nickel tab, for example.

The positive electrode tab 20 is provided in a middle portion in the longitudinal direction of the positive electrode 11, which is a position distanced from an end of an initial winding side and an end of a terminal winding side of the electrode assembly 14.

The negative electrode tab 21 is provided in one end portion in the longitudinal direction of the negative electrode 12, which positioned on an initial winding side of the negative electrode 12. The negative electrode 12 has a first negative electrode exposed portion (not illustrated) where a negative electrode current collector 40 is exposed, which is provided on the end of the initial winding side. The negative electrode tab 21 is bonded to the first negative electrode exposed portion.

On the outermost peripheral surface of the electrode assembly 14, the negative electrode 12 is disposed, and a second negative electrode exposed portion 44 where the surface of the negative electrode current collector 40 is exposed is provided. The negative electrode exposed portion 44 is in contact with an inner peripheral surface of the exterior housing can 16. The negative electrode exposed portion 44 being in contact with the inner peripheral surface of the exterior housing can 16, which is the negative electrode terminal, may electrically connect both end portions in the longitudinal direction of the negative electrode 12 and the exterior housing can 16 to achieve good current collectability. The negative electrode exposed portion 44 may be provided on a part of the outermost peripheral surface of the electrode assembly 14, but preferably provided on the entire region of the outermost peripheral surface. For example, the negative electrode exposed portion is provided on both surfaces of the negative electrode current collector 40 from the terminal winding end of the negative electrode 12 with a length greater than or equal to one round of the electrode assembly 14.

The position of the negative electrode tab to be disposed is not limited to the example illustrated in FIG. 1. The negative electrode tab may be provided only near the end on the terminal winding side of the negative electrode 12, or the negative electrode tab may be provided both near the end on the initial winding side and near the end on the terminal winding side of the negative electrode 12.

The exterior housing can 16 is a bottomed cylindrical metallic container opened on one side in an axial direction. A gasket 28 is provided between the exterior housing can 16 and the sealing assembly 17 to achieve sealability inside the secondary battery 10.
The exterior housing can 16 has a grooved portion 22 formed by, for example, pressing the side wall thereof from the outside to support the sealing assembly 17. The grooved portion 22 is preferably formed in a circular shape along a circumferential direction of the exterior housing can 16, and supports the sealing assembly 17 with the upper face of the grooved portion 22.

The sealing assembly 17 has the terminal plate 23, a lower vent member 24, an insulating member 25, an upper vent member 26, and the cap 27 that are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at each of middle portions thereof, and the insulating member 25 is interposed between circumferences thereof. If the internal pressure of the battery increases due to abnormal heat generation, for example, the lower vent member 24 breaks and thereby expanding the upper vent member 26 toward the cap 27 side to be separated from the lower vent member 24, resulting in cutting off of electrical connection between both the members. If the internal pressure further increases, the upper vent member 26 breaks, and gas is discharged through an opening portion of the cap 27.

Hereinafter, the positive electrode 11, the negative electrode 12, the separator 13, and the non-aqueous electrolyte, which constitute the secondary battery 10, specifically the negative electrode mixture layer 41 constituting the negative electrode 12, will be described in detail.

[Positive Electrode]

The positive electrode 11 comprises: a positive electrode current collector 30; and a positive electrode mixture layer 31 formed on the positive electrode current collector 30, namely both surfaces of the positive electrode current collector 30. For the positive electrode current collector 30, a foil of a metal stable within a potential range of the positive electrode, such as aluminum and an aluminum alloy, a film in which such a metal is disposed on a surface layer thereof, and the like may be used. The positive electrode mixture layer 31 includes a positive electrode active material, a binder, and a conductive agent, for example. The positive electrode mixture layer 31 may be formed only on one surface of the positive electrode current collector 30, but is preferably formed on both the surfaces of the positive electrode current collector 30. The positive electrode 11 may be manufactured by, for example, applying a positive electrode mixture layer slurry including the positive electrode active material, the binder, the conductive agent, and the like on the positive electrode current collector 30, and drying and compressing the coating film to form the positive electrode mixture layer 31 on both the surfaces of the positive electrode current collector 30.

The positive electrode active material included in the positive electrode mixture layer 31 is constituted with a lithium-containing metal composite oxide as a main component. Examples of a metal element contained in the lithium-containing metal composite oxide may include Ni, Co, Mn, Al, B, Mg, Ti, V, Cr, Fe, Cu, Zn, Ga, Sr, Zr, Nb, In, Sn, Ta, W, Ca, Sb, Pb, Bi, and Ge. An example of the preferable lithium-containing metal composite oxide is a composite oxide containing at least one of the group consisting of Ni, Co, Mn, and Al.

Examples of the conductive agent included in the positive electrode mixture layer 31 may include carbon materials such as carbon black, acetylene black, Ketjenblack, graphite, and carbon nanotube. Examples of the binder included in the positive electrode mixture layer may include fluororesins such as polytetrafluoroethylene (PTFE) and polyvinylidene fluoride (PVDF), polyacrylonitrile (PAN), a polyimide, an acrylic resin, and a polyolefin. With these resins, carboxymethylcellulose (CMC) or a salt thereof, polyethylene oxide (PEO), and the like may be used in combination.

[Negative Electrode]

The negative electrode 12 comprises: a negative electrode current collector 40; and a negative electrode mixture layer 41 formed on the negative electrode current collector 40, namely both surfaces of the negative electrode current collector 40. For the negative electrode current collector 40, a foil of a metal stable within a potential range of the negative electrode, such as copper and a copper alloy, a film in which such a metal is disposed on a surface layer thereof, and the like may be used. The negative electrode mixture layer 41 may be formed only on one surface of the negative electrode current collector 40, but is preferably formed on both surfaces of the negative electrode current collector 40. The negative electrode 12 may be manufactured by applying a negative electrode mixture layer slurry including the negative electrode active material, a silicate salt compound, and the binder on the negative electrode current collector, and drying and compressing the coating film to form the negative electrode mixture layer 41 on, for example, both the surfaces of the negative electrode current collector 40.

The negative electrode active material included in the negative electrode mixture layer 41 may be any material that may reversibly occlude and release lithium ions, and a carbon-based active material such as graphite may be used as follows.

As the negative electrode active material, a metal that forms an alloy with Li, such as Si and Sn, a metal compound including Si, Sn, or the like, a lithium-titanium composite oxide, and the like may be used. For example, a Si-containing compound represented by $SiO_x$ ($0.5 \leq x \leq 1.5$) as follows or a Si-containing compound in which fine particles of Si are dispersed in a lithium silicate phase represented by $Li_{2z}SiO_{(2+z)}$ ($0 < z < 2$) may be used in combination with graphite.

Examples of the binder included in the negative electrode mixture layer 41 include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used singly or in combination of two or more thereof.

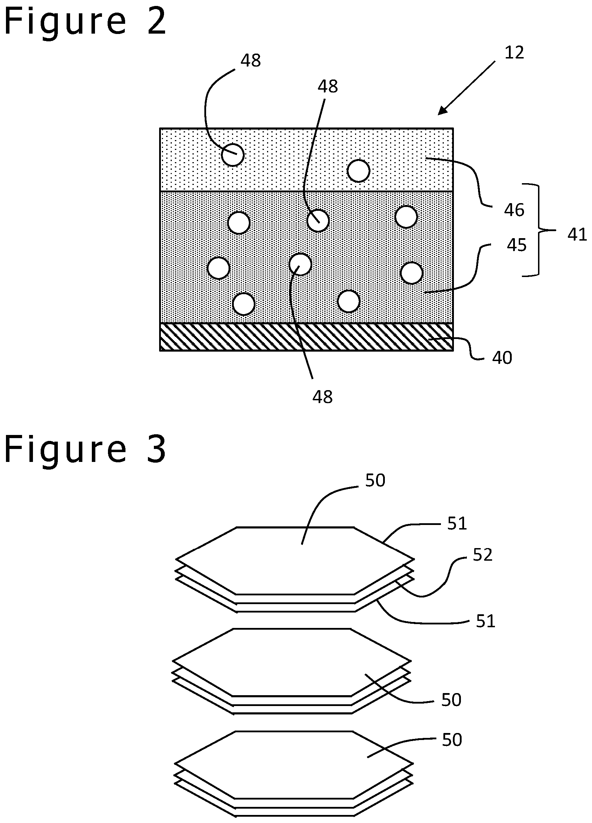

FIG. 2 is an outline sectional view illustrating one side in the thickness direction of the negative electrode 12. The negative electrode mixture layer 41 has a bilayer structure constituted with a first region 45 disposed on the negative electrode current collector 40 side and a second region 46 disposed on a side opposite to the negative electrode current collector 40 side, relative to the thickness direction. In the first region 45 and the second region 46, a silicate salt compound 48 is included in only the first region 45 or in each of the first region 45 and the second region 46. Further, a content of the silicate salt compound 48 in the first region 45 is higher than a content of the silicate salt compound 48 in the second region 46. Note that only the negative electrode mixture layer 41 on one side in the thickness direction of the negative electrode 12 is illustrated in FIG. 1, but the negative electrode mixture layer on the other side in the thickness direction of the negative electrode 12 is also formed symmetrically relative to the negative electrode mixture layer 41 on the one side in the thickness direction of the negative electrode 12 about the negative electrode current collector 40. Note that the negative electrode mixture layer 41 may be formed only on the one side in the thickness direction of the negative electrode 12.

The first region 45 and the second region 46 are layers including, for example, a carbon-based active material, a Si-based active material, polyacrylic acid or a salt thereof, and fibrous carbon, and the first region 45 is a lower layer and the second region 46 is an upper layer. Using the carbon-based active material having a high density (a carbon-based active material A) may achieve the capacity, and using the carbon-based active material having a high porosity (a carbon-based active material B) may improve impregnation. Changing an existing ratio between these carbon-based active materials A and B in the first region 45 and the second region 46 may achieve both the input-output characteristics and the energy density. As the carbon-based active material in the first region 45, the carbon-based active material having a high density (the carbon-based active material A) is preferably used in order to achieve the capacity, and as the carbon-based active material in the second region 46, the carbon-based active material having a high porosity (the carbon-based active material B) is preferably used in order to improve the impregnation.

A mass of the first region 45 is greater than or equal to 50 mass% and less than 90 mass%, and preferably greater than or equal to 60 mass% and less than or equal to 80 mass% relative to a mass of the negative electrode mixture layer 41. A mass of the second region 46 is greater than or equal to 10 mass% and less than or equal to 50 mass%, and preferably greater than or equal to 20 mass% and less than or equal to 40 mass% relative to the mass of the negative electrode mixture layer 41. That is, a mass ratio between the first region 45 and the second region 46 (the second region 46/the first region 45) is greater than or equal to 0.1 and less than or equal to 1, and preferably greater than or equal to 0.3 and less than or equal to 0.7.

If the mass of the first region 45 relative to the mass of the negative electrode mixture layer 41 is greater than or equal to 90 mass% and the mass of the second region 46 relative to the mass of the negative electrode mixture layer 41 is less than or equal to 10 mass%, the proportion of the second region 46, which contributes to, for example, improvement in the input characteristics, becomes small to deteriorate the input characteristics of the battery. If the mass of the first region 45 relative to the mass of the negative electrode mixture layer 41 is less than 50 mass% and the mass of the second region 46 relative to the mass of the negative electrode mixture layer 41 is greater than 50 mass%, a proportion of the first region 45 becomes small to make it difficult to increase the capacity of the battery.

A filling density of the negative electrode mixture layer 41 is preferably greater than or equal to 1.65 g/cm³ in terms of improvement in the battery capacity and the like. The filling density of the negative electrode mixture layer 41 is, for example, greater than or equal to 1.65 g/cm³ and less than or equal to 1.75 g/cm³. The filling densities of the first region 45 and the second region 46 may be the same as or different from each other. The filling density of the second region 46 is lower than the filling density of the first region 45, for example. An example of the filling density of the second region 46 is greater than or equal to 1.40 g/cm³ and less than or equal to 1.55 g/cm³. An example of the filling density of the first region 45 is greater than or equal to 1.70 g/cm³ and less than or equal to 1.95 g/cm³.

A thickness of the negative electrode mixture layer 41 is, for example, greater than or equal to 30 μm and less than or equal to 100 μm on one side of the negative electrode current collector 40. Thicknesses of the first region 45 and the second region 46 may be the same as or different from each other as long as the first region 45 and the second region 46 satisfy the above mass ratio. The thickness of the first region 45 may be larger than or smaller than the thickness of the second region 46. For example, a proportion of the thickness of the first region 45 relative to the thickness of the negative electrode mixture layer 41 may be greater than or equal to 50% and less than or equal to 80%, and the proportion of the thickness of the second region 46 relative to the thickness of the negative electrode mixture layer 41 may be greater than or equal to 20% and less than or equal to 50%. Note that the negative electrode mixture layer 41 may include a layer other than the first region 45 and the second region 46 within a range not impairing the object of the present disclosure.

For the carbon-based active material, graphite, amorphous carbon, or the like is used, and among these, graphite is preferable. Examples of graphite include natural graphite such as flake graphite and artificial graphite such as massive artificial graphite and graphitized mesophase-carbon microbead, and the natural graphite and the artificial graphite may be used in combination. In addition, a conductive coating layer such as amorphous carbon may be formed on a particle surface of the graphite.

As noted above, the first region 45 includes the Si-based active material, polyacrylic acid (PAA) or a salt thereof, and the fibrous carbon in addition to the carbon-based active material. PAA or a salt thereof strongly binds particles of the negative electrode active material (the Si-based active material and the carbon-based active material) with each other, thereby inhibiting increase in negative electrode active material particles isolated from a conductive path in the first region 45 even when the volume of the Si-based active material largely changes with charge and discharge. Thus, adding PAA or a salt thereof into the first region 45 inhibits deterioration in the cycle characteristics. In addition, the fibrous carbon forms a good conductive path in the first region 45 similarly to PAA or a salt thereof.

The Si-based active material is at least one of Si and a Si-containing compound, and preferably a Si-containing compound that causes less change in volume during charge and discharge than Si. The Si-containing compound is not particularly limited as long as the Si-containing compound is a compound containing Si, but preferably the compound represented by SiOx ($0.5 \leq x \leq 1.5$) as noted above. The Si-containing compound may be used singly or in combination of two or more thereof. On the particle surface of the Si-containing compound, a conductive coating constituted with a material having higher conductivity than the above compound is preferably formed. An average particle diameter (Dv50) of the Si-containing compound is, for example, greater than or equal to 1 μm and less than or equal to 15 μm.

SiOx has, for example, a structure in which Si is dispersed in an amorphous SiO₂ matrix. SiOx may include lithium silicate (for example, lithium silicate represented by $Li_{2z}SiO_{(2+z)}$ ($0 < z < 2$)) in the particles, and may have a structure in which Si is dispersed in the lithium silicate phase.

The above conductive coating is preferably a carbon coating. The carbon coating is formed at an amount of, for example, greater than or equal to 0.5 mass% and less than or equal to 10 mass% relative to a mass of the SiOx particles. Examples of a method for forming the carbon coating may include a method of mixing coal tar or the like with the Si-containing compound particles to be subjected to a thermal treatment, and a chemical vapor deposition method (CVD method) using a hydrocarbon gas or the like. In addition, the carbon coating may be formed by fixing carbon black, Ketjenblack, or the like with a binder on the surfaces of the Si-containing compound particles.

A mass ratio between the carbon-based active material and the Si-based active material included in the first region 45 is, for example, greater than or equal to 97:3 and less than or equal to 50:50, and preferably greater than or equal to 95:5 and less than or equal to 80:20. The mass ratio within the above range may relax the change in volume of the Si-based active material due to the carbon-based active material while increasing the capacity of the battery, and facilitates inhibition of deterioration in the cycle characteristics. In the first region 45, a proportion of the Si-based active material in the negative electrode active material is preferably greater than or equal to 5 mass% and less than or equal to 20 mass%, and more preferably greater than or equal to 5 mass% and less than or equal to 15 mass%.

PAA or a salt thereof included in the first region 45 and the second region 46 functions as the binder. The salt of PAA is, for example, a lithium salt, a sodium salt, a potassium salt, or an ammonium salt. The first region 45 and the second region 46 preferably include a second binder in addition to PAA or a salt thereof. Examples of the second binder include CMC or a salt thereof, styrene-butadiene copolymer (SBR), polyvinyl alcohol (PVA), and PEO. Among these, CMC or a salt thereof and SRB are preferable.

A content of the binder included in the first region 45 is, for example, preferably greater than or equal to 0.5 mass% and less than or equal to 10 mass%, and more preferably greater than or equal to 1 mass% and less than or equal to 5 mass% relative to the mass of the first region 45.

The fibrous carbon included in the first region 45 and the second region 46 is a conductive auxiliary agent, and forms a good conductive path in the first region 45 and the second region 46. The fibrous carbon is, for example, a carbon material having an aspect ratio of greater than or equal to 60 times, and has a size such that the fibrous carbon may be added into the first region 45 and the second region 46. The second region 46 is a layer in which a content rate of the fibrous carbon is higher than that in the first region 45. Since the second region 46 has a low density of the active material, the fibrous carbon is included at a relatively high content to achieve the conductive path.

Examples of the fibrous carbon may include carbon nanotube (CNT) and carbon nanofiber, and CNT is particularly preferable. Although the negative electrode mixture layer may crack due to expansion or contraction of the negative electrode active material particles during charge and discharge to loss the conductivity and decrease the active material that may contribute to charge and discharge, containing of CNT as the fibrous carbon may achieve the conductivity even with cracking, and deterioration in the charge-discharge cycle characteristics may be inhibited. CNT is not limited to single-wall CNT but may be double-wall CNT, multi-wall CNT, and a mixture thereof. CNT may be vapor grown carbon fiber, which is called VGCF(R). The fibrous carbon has a diameter of greater than or equal to 2 nm and less than or equal to 20 $\mu$m, and an entire length of greater than or equal to 0.03 $\mu$m and less than or equal to 500 $\mu$m, for example. A content of the fibrous carbon is, for example, preferably greater than or equal to 0.01 mass% and less than or equal to 5 mass%, and more preferably greater than or equal to 0.5 mass% and less than or equal to 3 mass% relative to the masses of the first region 45 and the second region 46.

The silicate salt compound 48 has lithiophilicity and high lithium diffusability. The silicate salt compound 48 includes, for example, a layered silicate salt compound 48 such as a layered silicate salt mineral. The layered silicate salt mineral includes structure in which a plurality of silicate salt layers are stacked. The layered silicate salt mineral may be particles, for example. The layered silicate salt mineral may be platy particles, spherical particles, massive particles, rodlike particles, or the like. The layered silicate salt mineral is montmorillonite (MMT), for example. The layered silicate salt mineral such as montmorillonite has a water-swelling property, cation adsorption ability, and a cation dispersibility.

FIG. 3 is a schematic view of montmorillonite being the silicate salt compound 48 included in the negative electrode. The montmorillonite has composition represented by $(Na,Ca)_{0.33}(Al,Mg)x(Si_4O_{10})(OH)_2 \cdot nH_2O$.

Specifically, in the montmorillonite, a sheet-shaped tetrahedral layer 51 in which tetrahedrons of Si and O are two-dimensionally bonded and a sheet-shaped octahedral layer 52 in which octahedrons of Al and OH are two-dimensionally bonded partially share O ions to constitute a basic layer 50 having a layered structure symmetrically sandwiching one octahedral layer 52 with two tetrahedral layers 51. Space between the layers in the montmorillonite is widened by water molecules penetrating between two of the basic layers 50. Between two of the basic layers 50, a layer of changeable cations such as $Na^+$, $Ca^{2+}$, and $K^+$ is formed. This configuration allows the silicate salt compound 48 including the montmorillonite to have the high adsorption ability of lithium ions being cations. In addition, it is known that the silicate salt compound 48 reduces energy consumption of dispersing lithium ions inside crystals. It is considered that this property allows the silicate salt compound 48 to have the high diffusability of lithium ions.

The layered silicate salt compound is preferably at least one type of smectite. Examples of preferable smectite include, in addition to the above montmorillonite, halloysite, hectorite, beidellite, nontronite, saponite, and sauconite. Among the layered silicate salt compounds, smectite has high affinity with lithium ions, and more effectively improves diffusability of lithium ions in the negative electrode mixture layer 41. The negative electrode mixture layer 41 includes at least one smectite selected from the group consisting of montmorillonite, halloysite, hectorite, beidellite, nontronite, saponite, and sauconite, for example. Among these, montmorillonite is preferable.

In the present embodiment, the content of the silicate salt compound 48 in the first region 45 is higher than the content of the silicate salt compound 48 in the second region 46 as noted above. The silicate salt compound 48 has high adsorption ability and high diffusability of lithium ions. Thus, transport of lithium ions in the negative electrode 12 is enhanced to reduce concentration unevenness of lithium ions in the thickness direction of the negative electrode mixture layer 41. As a result, the charge-discharge characteristics during high-rate cycles in the secondary battery 10 may be improved.

The content of the silicate salt compound 48 relative to the negative electrode mixture layer 41 in the first region 45 is preferably greater than or equal to 0.1 mass% and less than or equal to 3 mass%. The content of the silicate salt compound 48 relative to the negative electrode mixture layer 41 in the second region 46 is preferably greater than or equal to 0 mass% and less than or equal to 1 mass%. It may be configured such that the content of the silicate salt compound 48 relative to the negative electrode mixture layer 41 in the first region 45 is greater than or equal to 0.1 mass% and less than or equal to 3 mass% and the second region 46 does not include the silicate salt compound 48.

The negative electrode 12 is manufactured by, for example, the following method. Prepared is a first negative electrode mixture layer slurry that is for the first region 45 and that includes the carbon-based active material, the Si-based active material, the binder, the fibrous carbon, the silicate salt compound 48, and the like. In addition, prepared is a second negative electrode mixture layer slurry that is for the second region 46 and that includes the carbon-based active material, the Si-based active material, the binder, the fibrous carbon, and the like. The second negative electrode mixture layer slurry may include the silicate salt compound 48. Then, the first negative electrode mixture layer slurry is applied on the negative electrode current collector 40, and the coating film is dried to form the first region 45 on the negative electrode current collector 40. Subsequently, the second negative electrode mixture layer slurry is applied on the first region 45, the coating film is dried to form the second region 46 on the first region 45, and then the first region 45 and the second region 46 are compressed. The method as above yields the negative electrode 12 in which the negative electrode mixture layer 41 including the first region 45 and the second region 46 is formed on the negative electrode current collector 40.

[Separator]

For the separator 13, a porous sheet having an ion permeation property and an insulation property is used. Specific examples of the porous sheet include a microporous thin film, a woven fabric, and a nonwoven fabric. As a material for the separator 13, olefinic resins such as polyethylene, polypropylene, and a copolymer including at least one of ethylene and propylene, and cellulose are preferable. The separator 13 may have any one of a single-layered structure or a multi-layered structure. On a surface of the separator 13, a heat-resistant layer and the like may be formed.

[Non-Aqueous Electrolyte]

The non-aqueous electrolyte has ion conductivity (for example, lithium ion conductivity). The non-aqueous electrolyte includes a non-aqueous solvent and an electrolyte salt dissolved in the non-aqueous solvent. The non-aqueous electrolyte is not limited to a liquid electrolyte (a non-aqueous electrolyte liquid), and may be a solid electrolyte using a gel-like polymer or the like. For the electrolyte salt, a lithium salt such as LiBF4 and LiPF6 is used, for example. For the non-aqueous solvent, esters such as ethylene carbonate (EC), propylene carbonate (PC), dimethyl carbonate (DMC), ethyl methyl carbonate (EMC), diethyl carbonate (DEC), and methyl propionate (MP), ethers, nitriles, amides, and a mixed solvent of two or more thereof are used, for example. The non-aqueous solvent may contain a halogen-substituted derivative in which hydrogen of these solvents described above is at least partially substituted with a halogen atom such as fluorine.

Examples of the halogen-substituted derivative include fluorinated cyclic carbonates such as fluoroethylene carbonate (FEC), fluorinated chain carbonates, and fluorinated chain carboxylates such as methyl fluoropropionate (FMP). In terms of inhibition of deterioration in the charge-discharge cycle characteristics of the non-aqueous electrolyte secondary battery, improvement in the input characteristics, or the like, the non-aqueous electrolyte preferably includes FEC at greater than or equal to 5 mass%, and more preferably includes FEC at greater than or equal to 5 mass% and less than or equal to 15 mass% relative to the mass of the non-aqueous electrolyte.

As the solid electrolyte, a solid or gel-like polymer electrolyte, an inorganic solid electrolyte, or the like is used. The polymer electrolyte includes, for example, the lithium salt and a matrix polymer, or the non-aqueous solvent, the lithium salt, and a matrix polymer. As the matrix polymer, a polymer material that absorbs the non-aqueous solvent to gel is used, for example. As the polymer material, a fluororesin, an acrylic resin, a polyether resin, and the like are used, for example. As the inorganic solid electrolyte, known materials for an all-solid lithium ion secondary battery and the like (such as an oxide-type solid electrolyte, a sulfide-type solid electrolyte, and a halide-type solid electrolyte) are used, for example.

EXAMPLES

Hereinafter, the present disclosure will be further described with Examples, but the present disclosure is not limited to the following Examples.

<Example 1>

[Positive Electrolyte]

As a positive electrode active material, a lithium-transition metal oxide represented by $LiNiCoAlO_2$ was used. 99.0 parts by mass of the positive electrode active material, 0.4 parts by mass of carbon nanotube (CNT), and 0.6 parts by mass of polyvinylidene fluoride (PVDF) were mixed, and an appropriate amount of N-methyl-2-pyrrolidone (NMP) was further added to adjust a positive electrode mixture layer slurry. Then, the positive electrode mixture layer slurry was applied on a positive electrode current collector composed of aluminum foil while leaving a portion where a positive electrode tab was to be connected, and the coating film was dried. The coating film was rolled using a roller, and then cut to a predetermined electrode size to produce a positive electrode 11 in which a positive electrode mixture layer was formed on both surfaces of the positive electrode current collector.

[Negative Electrode]

To constitute the first region 45 on a negative electrode current collector side for one of a negative electrode mixture layer, graphite, a Si-containing compound, a lithium salt of polyacrylic acid (PAA), a sodium salt of carboxymethylcellulose (CMC), a dispersion of styrene-butadiene copolymer (SBR), carbon nanotube (CNT), and montmorillonite were mixed at a solid-content mass ratio of 89.75:7.32:0.22:0.81:1.44:0.01:0.45, and an appropriate amount of water was added to adjust a first negative electrode mixture layer slurry for the first region 45.

To constitute the second region 46 on the negative electrode current collector side for one of the negative electrode mixture layer, graphite, a Si-containing compound, a lithium salt of polyacrylic acid (PAA), a sodium salt of carboxymethylcellulose (CMC), a dispersion of styrene-butadiene copolymer (SBR), and carbon nanotube (CNT) were mixed at a solid-content mass ratio of 89.81:7.33:0.58:1.08:1.17:0.03, and an appropriate amount of water was added to prepare a second negative electrode mixture layer slurry for the second region 46.

Then, the first negative electrode mixture layer slurry was applied on both surfaces of a negative electrode current collector 40 composed of copper foil while leaving a portion where a negative electrode tab was to be connected, and the coating film was dried to form the first region 45 on both the surfaces of the negative electrode current collector 40. Subsequently, the second negative electrode mixture layer slurry was applied on the first region 45 formed on both the surfaces of the negative electrode current collector 40, and the coating film was dried to form the second region 46. Then, the coating film was rolled using a roller, and then cut to a predetermined electrode size to produce a negative electrode 12 in which a negative electrode mixture layer 41 including the first region 45 and the second region 46 was formed on both the surfaces of the negative electrode current collector. Thus, a content of montmorillonite in the first region 45, which was 0.45 mass%, was higher than a content of montmorillonite in the second region 46, which was 0%. Note that masses of the first region 45 and the second region 46 in the negative electrode mixture layer 41 were measured, resulting in a mass ratio of the second region 46/the first region 45 of 0.33.

[Non-Aqueous Electrolyte]

Into a mixed solvent in which ethylene carbonate (EC), fluorinated ethylene carbonate (FEC), ethyl methyl carbonate (EMC), and dimethyl carbonate (DMC) were mixed at a volume ratio of 10:10:5:75, vinylene carbonate (VC) was added at 4 mass%, and LiPF6 was dissolved at a rate of 1.35 mol/L to prepare a non-aqueous electrolyte.

[Test Cell]

A negative electrode tab and a positive electrode tab were attached to the above negative electrode 12 and the above positive electrode 11, respectively, and the negative electrode 12 and the positive electrode 11 were each alternately stacked one by one via a separator 13 to produce a wound electrode assembly. For the separator 13, a single-layer separator made of polypropylene was used. The produced electrode assembly was inserted into an exterior body constituted with aluminum laminate sheets, and an opening portion of the exterior body was sealed to produce a test cell (a laminate cell). The test cell had a design capacity of 440 mAh.

<Example 2>

In the preparation of the first negative electrode mixture layer slurry for the first region 45, graphite, the Si-containing compound, the lithium salt of polyacrylic acid (PAA), the sodium salt of carboxymethylcellulose (CMC), the dispersion of styrene-butadiene copolymer (SBR), carbon nanotube (CNT), and montmorillonite were mixed at a solid-content mass ratio of 89.75:7.32:0.22:0.81:1.44:0.01:0.45. In the adjustment of the second negative electrode mixture layer slurry for the second region 46, graphite, the Si-containing compound, the lithium salt of polyacrylic acid (PAA), the sodium salt of carboxymethylcellulose (CMC), the styrene-butadiene copolymer (SBR), carbon nanotube (CNT), and montmorillonite were mixed at a solid-content mass ratio of 89.57:7.31:0.58:1.07:1.16:0.03:0.27. The other conditions in Example 2 were the same as in Example 1 to produce a test cell. Thus, in Example 2, a content of montmorillonite in the first region 45, which was 0.45 mass%, was higher than a content of montmorillonite in the second region 46, which was 0.27 mass%.

<Comparative Example 1>

A test cell was produced in the same manner as in Example 1 except that, in the preparation of the negative electrode mixture layer slurry: only adjusted was a mixture of graphite, the Si-containing compound, the lithium salt of polyacrylic acid (PAA), the sodium salt of carboxymethylcellulose (CMC), the dispersion of styrene-butadiene copolymer (SBR), and carbon nanotube (CNT) at a solid-content mass ratio of 90.07:7.35:0.32:0.88:1.37:0.01; and this slurry was applied on both the surfaces of the negative electrode current collector. Thus, in Comparative Example 1, the negative electrode mixture layer was not separated into the first region and the second region, and a content of montmorillonite in the negative electrode mixture layer was entirely constant in the thickness direction, which was 0%.

<Comparative Example 2>

In the preparation of the first negative electrode mixture layer slurry for the first region, graphite, the Si-containing compound, the lithium salt of polyacrylic acid (PAA), the sodium salt of carboxymethylcellulose (CMC), the dispersion of styrene-butadiene copolymer (SBR), and carbon nanotube (CNT) were mixed at a solid-content mass ratio of 90.16:7.36:0.23:0.81:1.44:0.01. In the adjustment of the second negative electrode mixture layer slurry for the second region, graphite, the Si-containing compound, the lithium salt of polyacrylic acid (PAA), the sodium salt of carboxymethylcellulose (CMC), the styrene-butadiene copolymer (SBR), and carbon nanotube (CNT) were mixed at a solid-content mass ratio of 89.81:7.33:0.58:1.08:1.17:0.03. The other conditions in Comparative Example 2 were the same as in Example 1 to produce a test cell. Thus, in Comparative Example 2, a content of montmorillonite in the first region and a content of montmorillonite in the second region were the same, which were 0%.

<Comparative Example 3>

In the preparation of the first negative electrode mixture layer slurry for the first region, graphite, the Si-containing compound, the lithium salt of polyacrylic acid (PAA), the sodium salt of carboxymethylcellulose (CMC), the dispersion of styrene-butadiene copolymer (SBR), and carbon nanotube (CNT) were mixed at a solid-content mass ratio of 90.16:7.36:0.23:0.81:1.44:0.01. In the adjustment of the second negative electrode mixture layer slurry for the second region, graphite, the Si-containing compound, the lithium salt of polyacrylic acid (PAA), the sodium salt of carboxymethylcellulose (CMC), the styrene-butadiene copolymer (SBR), carbon nanotube (CNT), and montmorillonite were mixed at a solid-content mass ratio of 89.41:7.30:0.58:1.07:1.16:0.03:0.45. The other conditions in Comparative Example 3 were the same as in Example 1 to produce a test cell. Thus, in Comparative Example 3, a content of montmorillonite in the first region, which was 0%, was lower than a content of montmorillonite in the second region, which was 0.45 mass%.

<Comparative Example 4>

A test cell was produced in the same manner as in Comparative Example 1 except that, in the preparation of the negative electrode mixture layer slurry: only adjusted was a mixture of graphite, the Si-containing compound, the lithium salt of polyacrylic acid (PAA), the sodium salt of carboxymethylcellulose (CMC), the dispersion of styrene-butadiene copolymer (SBR), carbon nanotube (CNT), and montmorillonite at a solid-content mass ratio of 89.66:7.32:0.31:0.87:1.37:0.01:0.45; and this slurry was applied on both the surfaces of the negative electrode current collector. Thus, in Comparative Example 4, the negative electrode mixture layer was not separated into the first region and the second region, and a content of montmorillonite in the negative electrode mixture layer was entirely constant in the thickness direction, which was 0.45 mass%.

<Comparative Example 5>

In the preparation of the first negative electrode mixture layer slurry for the first region, graphite, the Si-containing compound, the lithium salt of polyacrylic acid (PAA), the sodium salt of carboxymethylcellulose (CMC), the dispersion of styrene-butadiene copolymer (SBR), carbon nanotube (CNT), and montmorillonite were mixed at a solid-content mass ratio of 89.75:7.32:0.22:0.81:1.44:0.01:0.45. In the adjustment of the second negative electrode mixture layer slurry for the second region, graphite, the Si-containing compound, the lithium salt of polyacrylic acid (PAA), the sodium salt of carboxymethylcellulose (CMC), carbon nanotube (CNT), the styrene-butadiene copolymer (SBR), and montmorillonite were mixed at a solid-content mass ratio of 89.41:7.30:0.58:1.07:1.16:0.03:0.45. The other conditions in Comparative Example 5 were the same as in Example 1 to produce a test cell. Thus, in Comparative Example 5, a content of montmorillonite in the first region and a content of montmorillonite in the second region were the same, which were 0.45%.

Table 1 shows the configuration of the negative electrode mixture layer in the test cells of Examples 1 to 2 and Comparative Examples 1 to 5 and the amounts of montmorillonite (MMT) added in the second region and the first region or in the monolayer in mass%.

[Table 1]

| | Configuration of negative electrode mixture layer | Amount of MMT added in second region or monolayer (mass%) | Amount of MMT added in first region or monolayer (mass%) | Capacity retention rate after 100 cycles (%) | Cell resistance increasing rate after 100 cycles (%) |
|---|---|---|---|---|---|
| Comparative Example1 | Monolayer | 0 | | 94.8 | 108.1 |
| Comparative Example2 | Bilayer | 0 | 0 | 94.9 | 108.1 |
| Comparative Example3 | Bilayer | 0.45 | 0 | 94.4 | 118.3 |
| Comparative Example4 | Monolayer | 0.45 | | 92.9 | 109.5 |
| Comparative Example5 | Bilayer | 0.45 | 0.45 | 95.6 | 104.8 |
| Example1 | Bilayer | 0 | 0.45 | 96.8 | 104.4 |
| Example2 | Bilayer | 0.27 | 0.45 | 96.4 | 104.5 |

[Evaluation of Capacity retention rate]

Under a temperature environment at 25°C, the test cells of Examples 1 to 2 and Comparative Examples 1 to 5 were charged at a constant current of 1 It until a battery voltage reached 4.2 V, and then charged at a constant voltage of 4.2 V until a current value reached 0.02 It. Thereafter, the test cells were discharged at a constant current of 1 It until the battery voltage reached 2.5 V. These charge and discharge were performed for 100 cycles, and the capacity retention rate in the charge-discharge cycles was determined based on the following formula.

Capacity retention rate = (Charge capacity at 100th cycle/Charge capacity at 1st cycle) $\times$ 100

[Evaluation of Input Characteristics]

Under a temperature environment at 25°C, the test cells of Examples 1 to 2 and Comparative Examples 1 to 5 were charged at a constant current of 0.3 It up to the half of the initial capacity, then charged at a constant voltage until a current value reached 0.05 It, and charge was stopped and the test cells were left to stand for 2 hours. Then, a voltage after discharge at a current value of 0.5 It for 30 seconds was measured. From a drop in the voltage in the discharge for 30 seconds and the value of flown current, the cell resistance was determined by the following formula for calculating the cell resistance. Cell resistance = (Drop in voltage in discharge for 30 seconds/Current value (0.5 It))
The initial cell resistance and the cell resistance after the 100 cycles in the above evaluation of the capacity retention rate were measured to determine the cell resistance increasing rate by the following formula for calculating the cell resistance increasing rate.

Cell resistance increasing rate = (Cell resistance at 100th cycle/Cell resistance at 1st cycle) $\times$ 100

The above Table 1 shows the evaluation results of the capacity retention rate and the cell resistance increasing rate of the test cells of Examples 1 to 2 and Comparative Examples 1 to 5.
From the results shown in Table 1, in Comparative Examples 1 to 5, the content of montmorillonite in the first region 45 was less than or equal to the content of montmorillonite in the second region 46 of the negative electrode mixture layer, and the capacity retention rate after the 100 cycles was all less than or equal to 95.6%, which was decreased. In Comparative Examples 1 to 5, the cell resistance increasing rate after the 100 cycles was all greater than or equal to 104.8%, which was increased. Meanwhile, in Examples 1 to 2, the capacity retention rate after the 100 cycles was greater than or equal to 96.8%, which was increased. In Examples 1 to 2, the cell resistance increasing rate after the 100 cycles was less than or equal to 104.4%, which was decreased. It was considered that this was because the content of montmorillonite in the first region 45 was higher than the content of montmorillonite in the second region 46 to enhance transport of lithium ions in the negative electrode 12, resulting in reduction in concentration unevenness of lithium ions in the thickness direction of the negative electrode mixture layer 41.

(Supplement)

The present disclosure will be further described with the following embodiments.

Constitution 1:
A non-aqueous electrolyte secondary battery, comprising:

a negative electrode current collector; and
a negative electrode mixture layer formed on the negative electrode current collector, wherein
the negative electrode mixture layer includes: a negative electrode active material that can occlude and release lithium ions; and a silicate salt compound,
the negative electrode mixture layer has: a first region disposed on a side of the negative electrode current collector relative to a thickness direction; and a second region disposed on a side opposite to the side of the negative electrode current collector relative to the thickness direction, and
a content of the silicate salt compound in the first region is higher than a content of the silicate salt compound in the second region.

Constitution 2:
The non-aqueous electrolyte secondary battery according to Constitution 1, wherein the content of the silicate salt compound relative to the negative electrode mixture layer in the first region is greater than or equal to 0.1 mass% and less than or equal to 3 mass%.
Constitution 3:
The non-aqueous electrolyte secondary battery according to Constitution 1 or 2, wherein the content of the silicate salt compound relative to the negative electrode mixture layer in the second region is greater than or equal to 0 mass% and less than or equal to 1 mass%.
Constitution 4:
The non-aqueous electrolyte secondary battery according to any one of Constitutions 1 to 3, wherein

the content of the silicate salt compound relative to the negative electrode mixture layer in the first region is greater than or equal to 0.1 mass% and less than or equal to 3 mass%, and
the silicate salt compound is not included in the second region.

Constitution 5:
The non-aqueous electrolyte secondary battery according to any one of Constitutions 1 to 4, wherein the silicate salt compound includes montmorillonite.
Constitution 6:
The non-aqueous electrolyte secondary battery according to any one of Constitutions 1 to 5, wherein

the negative electrode mixture layer further includes a conductive auxiliary agent, and
the conductive auxiliary agent includes carbon nanotube.

REFERENCE SIGNS LIST

10 Lithium ion secondary battery (Secondary battery), 11 Positive electrode, 12 Negative electrode, 13 Separator, 14 Electrode assembly, 16 Exterior housing can, 17 Sealing assembly, 18 Upper insulating plate, 19 Lower insulating plate, 20 Positive electrode tab, 21 Negative electrode tab, 22 Grooved portion, 23 Terminal plate, 24 Lower vent member, 25 Insulating member, 26 Upper vent member, 27 Cap, 28 Gasket, 30 Positive electrode current collector, 31 Positive electrode mixture layer, 40 Negative electrode current collector, 41 Negative electrode mixture layer, 44 Second negative electrode exposed portion, 45 First region, 46 Second region, 48 Silicate salt compound, 50 Basic layer, 51 Tetrahedral layer, 52 Octahedral layer.

**Claims**

1. A non-aqueous electrolyte secondary battery, comprising:

a negative electrode current collector; and

a negative electrode mixture layer formed on the negative electrode current collector, wherein

the negative electrode mixture layer includes: a negative electrode active material that can occlude and release lithium ions; and a silicate salt compound,

the negative electrode mixture layer has: a first region disposed on a side of the negative electrode current collector relative to a thickness direction; and a second region disposed on a side opposite to the side of the negative electrode current collector relative to the thickness direction, and

a content of the silicate salt compound in the first region is higher than a content of the silicate salt compound in the second region.

2. The non-aqueous electrolyte secondary battery according to claim 1, wherein the content of the silicate salt compound relative to the negative electrode mixture layer in the first region is greater than or equal to 0.1 mass% and less than or equal to 3 mass%.

3. The non-aqueous electrolyte secondary battery according to claim 1, wherein the content of the silicate salt compound relative to the negative electrode mixture layer in the second region is greater than or equal to 0 mass% and less than or equal to 1 mass%.

4. The non-aqueous electrolyte secondary battery according to claim 1, wherein

the content of the silicate salt compound relative to the negative electrode mixture layer in the first region is greater than or equal to 0.1 mass% and less than or equal to 3 mass%, and

the silicate salt compound is not included in the second region.

5. The non-aqueous electrolyte secondary battery according to any one of claims 1 to 4, wherein the silicate salt compound includes montmorillonite.

6. The non-aqueous electrolyte secondary battery according to any one of claims 1 to 4, wherein

the negative electrode mixture layer further includes a conductive auxiliary agent, and

the conductive auxiliary agent includes carbon nanotube.

# Figure 1

# Figure 2

# Figure 3

## INTERNATIONAL SEARCH REPORT

| International application No. |
|---|
| **PCT/JP2024/025268** |

### A. CLASSIFICATION OF SUBJECT MATTER

*H01M 4/13*(2010.01)i; *H01M 4/62*(2006.01)i
FI: H01M4/13; H01M4/62 Z

According to International Patent Classification (IPC) or to both national classification and IPC

### B. FIELDS SEARCHED

Minimum documentation searched (classification system followed by classification symbols)

H01M4/13; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/181266 A1 (PANASONIC INTELLECTUAL PROPERTY MANAGEMENT CO., LTD.) 01 September 2022 (2022-09-01)<br>claims | 1-6 |
| A | JP 2008-071757 A (LG CHEM, LTD.) 27 March 2008 (2008-03-27)<br>claims | 1-6 |
| A | JP 9-306494 A (TDK CORP.) 28 November 1997 (1997-11-28)<br>entire text | 1-6 |

☐ Further documents are listed in the continuation of Box C.   ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **09 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/025268**

| Patent document cited in search report | | | Publication date (day/month/year) | Patent family member(s) | | | Publication date (day/month/year) |
|---|---|---|---|---|---|---|---|
| WO | 2022/181266 | A1 | 01 September 2022 | US claims | 2024/0128448 | A1 | |
| | | | | EP | 4300617 | A1 | |
| | | | | CN | 116848676 | A | |
| JP | 2008-071757 | A | 27 March 2008 | US claims | 2008/0063939 | A1 | |
| | | | | KR | 10-2008-0023373 | A | |
| | | | | CN | 101202345 | A | |
| JP | 9-306494 | A | 28 November 1997 | (Family: none) | | | |

Form PCT/ISA/210 (patent family annex) (July 2022)

**REFERENCES CITED IN THE DESCRIPTION**

**Patent documents cited in the description**

- JP 2020057500 A
- WO 20200271763 A